# EUROPEAN PATENT APPLICATION

(11) **EP 4 715 535 A1**
(43) Date of publication of application: **25.03.2026**
(21) Application number: 25201538.3
(22) Date of filing: 11.09.2025
(51) Int. Cl.: G06F 3/01, G06F 15/16, G06F 3/02, G06F 3/023, G06F 15/00, G08C 17/02

(54) **COMPUTER PROGRAM, OPERATION METHOD, AND ELECTRONIC DEVICE**

(30) Priority: 20.09.2024 JP 2024163923
(71) Applicant: Casio Computer Co., Ltd., Tokyo 151-8543 (JP)
(72) Inventor: YOSHIZAWA, Hiroaki, Tokyo, 205-8555 (JP)
(74) Representative: Plougmann Vingtoft a/s

(57) **Abstract**

A computer program for controlling an operation of an electronic device including a user interface configured to receive a user operation, a communication module and at least one processor, the computer program includes instructions which, when the program is executed by the at least one processor, causing the electronic device to perform: operating in a first mode in which a calculation is performed based on an operation on the user interface or a second mode in which information input via the user interface is transmitted to an external device via the communication module; after detecting a first operation for instructing mode switching from the first mode to the second mode and before a connection processing for performing wireless communication with the external device is completed, the connection processing being started by the first operation, stopping the connection processing in response to detecting the first operation again.

## Description

### TECHNICAL FIELD

The disclosure of the present specification relates to a computer program, an operation method, and an electronic device.

### BACKGROUND ART

An AC (all-clear) key provided in an operation unit is widely recognized as a key for stopping and ending a series of processing. An example of ending the processing by the AC key is described in, for example, JPH02-135593A.

### SUMMARY OF INVENTION

The end processing performed in response to the AC key is not intended to be restarted. Therefore, for example, when connection processing between a wireless communication device and another device is ended by the AC key, not only the connection processing is ended, but also all processing results so far are cleared. In view of the above circumstances, an object according to an aspect of the present invention is to provide a technique for appropriately stopping connection processing for wireless communication.

One illustrative aspect of the present disclosure provides a computer program for controlling an operation of an electronic device, the electronic device including: a user interface configured to receive a user operation; a communication module including an antenna for performing wireless communication with an external device; and at least one processor. The computer program includes instructions which, when the program is executed by the at least one processor, causing the electronic device to perform: operating in any of a plurality of operation modes including: a first mode in which a calculation is performed based on an operation on the user interface; and a second mode in which information input via the user interface is transmitted to the external device via the communication module; detect, on the user interface, a first operation for instructing mode switching from the first mode to the second mode; and after detecting the first operation and before a connection processing for performing wireless communication with the external device is completed, the connection processing being started by the first operation, in response to detecting the first operation again, stopping the connection processing.

According to the above aspect, a technique for appropriately stopping the connection processing for wireless communication can be provided.

### BRIEF DESCRIPTION OF DRAWINGS

FIG. 1 is a front view of an electronic device.
FIG. 2 is a block diagram showing a hardware configuration of the electronic device.
FIG. 3 is a diagram showing a concept of a CAL mode and a PC mode.
FIG. 4 is a diagram illustrating a process of connecting the electronic device and an external device by wireless communication.
FIG. 5 is a diagram showing a transition of operation states of the electronic device.
FIG. 6 is a diagram showing a display example of a display unit in each of the operation states of the electronic device.
FIG. 7 is a flowchart showing an example of a display process performed by the electronic device.
FIGS. 8A to 8E are diagrams showing operation examples and display examples of the electronic device.
FIGS. 9A to 9E are schematic diagrams showing other operation examples and display examples of the electronic device.
FIG. 10 is a flowchart showing an example of a response process performed by the electronic device during connection processing.
FIGS. 11A to 11D are schematic diagrams showing operation examples and display examples of the electronic device.
FIGS. 12A to 12D are schematic diagrams showing other operation examples and display examples of the electronic device.
FIGS. 13A to 13D are schematic diagrams showing still other operation examples and display examples of the electronic device.

### DESCRIPTION OF EMBODIMENTS

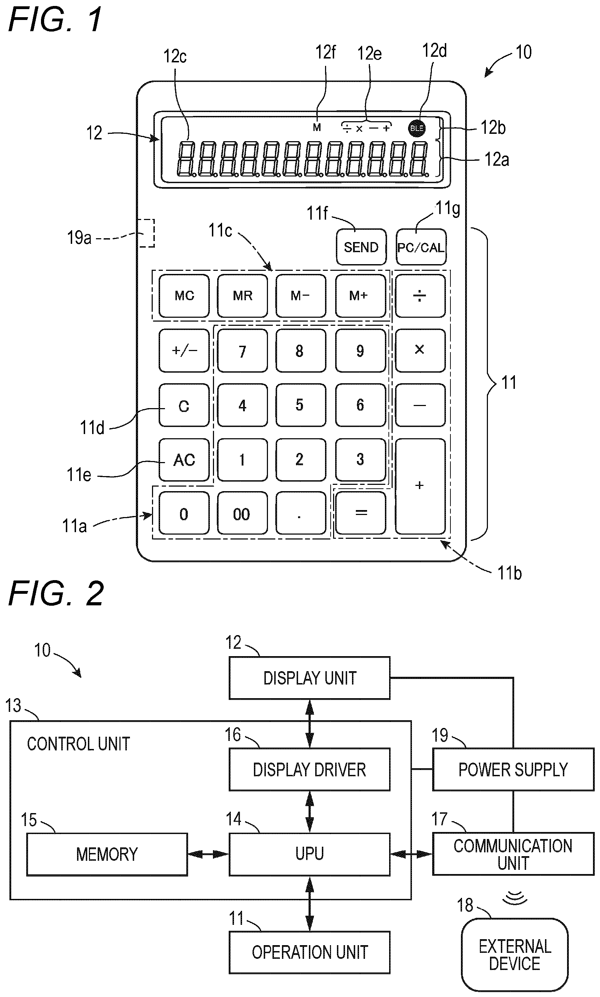

Operation modes of an electronic device 10 shown in FIG. 1 can be switched between a calculator mode (hereinafter, referred to as a CAL mode) in which the electronic device 10 is used as a calculator for calculation, and an external connection mode (hereinafter, referred to as a PC mode) in which the electronic device 10 wirelessly communicates with an external device to input information to the external device (the own device is not used as a calculator).

An operation unit 11 of the electronic device 10 is a part for receiving an operation of a user and includes a plurality of physical keys. In a numeric key region 11a of the operation unit 11, a total of eleven numeric keys from "0" to "9" and "00" and a decimal point key are arranged. In a calculation instruction key region 11b of the operation unit 11, four arithmetic operation keys for selecting a type of an arithmetic operation including addition, subtraction, multiplication, division (+, -, ×, ÷), and an equal key for selecting completion of the arithmetic operation are arranged. In a memory key region 11c of the operation unit 11, four keys (MC, MR, M +, M -) for memory operations are arranged. The operation unit 11 further includes a clear key (C key) 11d, an all-clear key (AC key) 11e, a SEND key 11f, and a PC/CAL key 11g. When the electronic device 10 is used as a calculator, a number input immediately before is erased by operating the clear key 11d, and all the numbers are erased by operating the all-clear key 11e. The SEND key 11f and the PC/CAL key 11g are used as operation keys related to wireless communication with an external device 18 to be described later, and form a setting unit for selectively setting any one of the CAL mode which is a first mode and the PC mode which is a second mode. The operation unit 11 may include a key other than the keys shown in FIG. 1 (for example, a function key for tax calculation, a function key for function calculation, or the like), a slide switch other than the push-in type key, or the like. The operation unit 11 is not limited to the physical keys, and may be implemented by a touch panel or the like.

The display unit 12 of the electronic device 10 is implemented by a display device such as a liquid crystal display or a light emitting diode (LED). The display unit 12 includes a first display region 12a and a second display region 12b. The first display region 12a includes a plurality of seven-segment display units 12c. In the electronic device 10, twelve seven-segment display units 12c are arranged adjacently, and the first display region 12a has a display capability of 12 digits. Each of the seven-segment display units 12c has seven segments each of which is an elongated rod-shaped display unit, and display of each segment can be individually switched on and off. A display content changes depending on a combination of on and off of the display of the seven segments. Specifically, each of the seven-segment display units 12c can display Arabic numerals from 0 to 9 and a part of Latin characters (alphabets). In the second display region 12b, a mark or an icon specialized for displaying specific information in the electronic device 10 is arranged. Specifically, a communication indicator 12d indicating a state of communication or connection with the external device, a four arithmetic operation indicator 12e indicating an arithmetic operation of addition, subtraction, multiplication, multiplication (+, -, x, ÷), a memory indicator 12f indicating a state of memory calculation, and the like are arranged in the second display region 12b. The second display region 12b may include display elements (marks, icons, and the like) other than the indicators shown in FIG. 1. Although FIG. 1 shows a form in which the indicators in the second display region 12b are displayed at the same time for convenience, actually, regarding the four arithmetic operation indicator 12e and the memory indicator 12f, only an indicator corresponding to a key operated by the user in the calculation instruction key region 11b and the memory key region 11c is displayed, and regarding the communication indicator 12d, display corresponding to a communication state to be described later is performed. The first display region 12a is an example of a predetermined region in which a numerical value as a result of calculation in the CAL mode is displayed and a display content is variable. Meanwhile, the second display region 12b is an example of a second predetermined region in which predetermined information (display element) is displayed.

As shown in FIG. 2, a control unit 13 of the electronic device 10 includes a central processing unit (CPU) 14 that is a processor, a memory 15 that is a storage unit, and a display driver 16 that drives and controls the display on the display unit 12. When each key of the operation unit 11 is operated, an operation signal is input to the control unit 13. The memory 15 includes a read only memory (ROM) in which a program for controlling the electronic device 10 is stored, and a random access memory (RAM) used as a temporary data storage area. Each unit of the electronic device 10 is controlled by reading the program stored in the ROM of the memory 15 and performing arithmetic processing by the memory 15. The display driver 16 controls the display unit 12 based on a control signal transmitted from the CPU 14 to perform display in the first display region 12a and the second display region 12b.

A communication unit 17 is a wireless communication module for the electronic device 10 to wirelessly communicate with another external device 18, and performs wireless communication with the external device 18. The wireless communication module may include an antenna for performing wireless communication with the external device 18. The external device 18 with which the communication unit 17 communicates is, for example, a personal computer, a tablet computer, or a smartphone. A communication standard of the communication unit 17 is to exchange encryption keys with the external device 18 to perform encrypted data communication, and Bluetooth Low Energy (registered trademark) is applied as an example. Hereinafter, a case where the electronic device 10 uses Bluetooth Low Energy as the communication standard, that is, a case where the communication unit 17 is a communication module for Bluetooth Low Energy will be described. The external device 18 includes a communication module that can perform encrypted communication with the communication unit 17.

The electronic device 10 incorporates a power supply 19, and the electronic device 10 operates by power supply from the power supply 19. The power supply 19 is a secondary battery (a lithium ion battery, a nickel metal hydride battery, or the like) that can be repeatedly charged and discharged, and can be charged by supplying power to the power supply 19 via a power supply terminal 19a (FIG. 1). The electronic device 10 may include a solar panel that converts light energy into power, and the power generated by the solar panel may be supplied to the power supply 19.

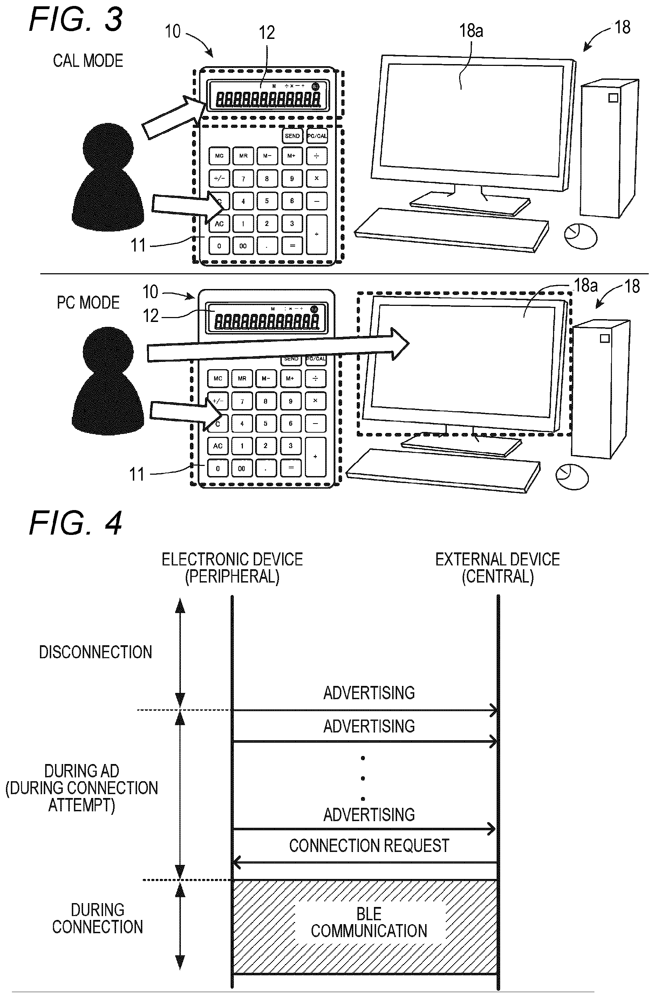

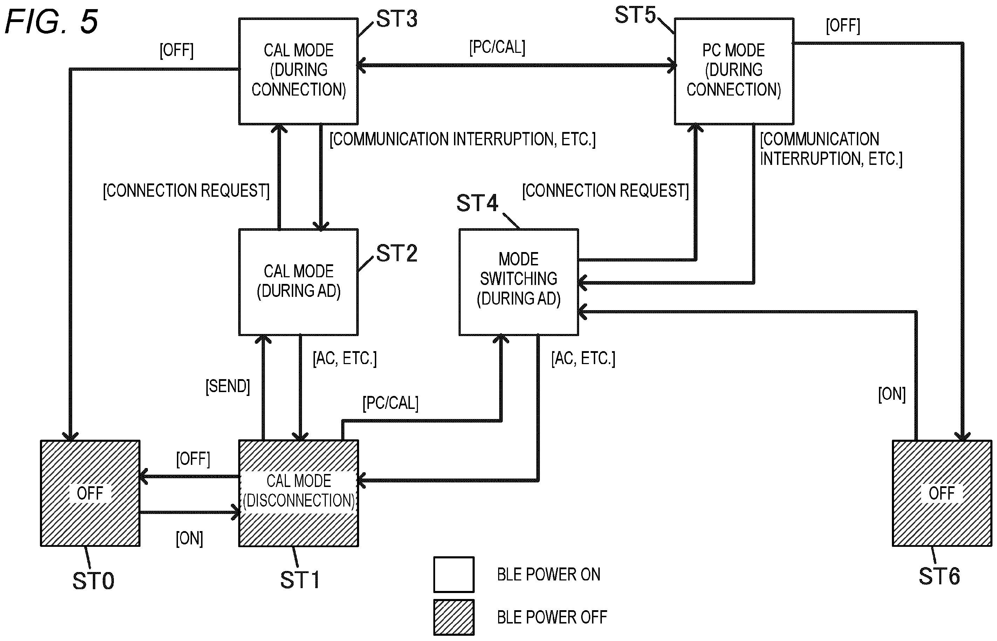

As shown in FIG. 3, in the CAL mode in the electronic device 10, when the user operate the operation unit 11, the electronic device 10 functions as a calculator to perform calculation or the like according to the operation of the user, and an operation content (for example, a numerical value input due to the operation on the numeric key) and a calculation result are displayed on the display unit 12. That is, the CAL mode is an example of the first mode of the electronic device 10 that executes calculation based on an operation on the operation unit 11. As will be described later, the CAL mode includes a case where the electronic device 10 functions as a stand-alone terminal that does not communicate with the external device 18 (CAL mode (disconnection) of ST1 shown in FIG. 5) and a case where the electronic device 10 can communicate with the external device 18 (CAL mode (during connection) of ST3 shown in FIG. 5), but the electronic device 10 functions as a calculator by itself in any case.

In the PC mode in the electronic device 10, the electronic device 10 does not function as an independent calculator, and when the user operates the operation unit 11, a signal corresponding to an operation content is wirelessly transmitted from the electronic device 10 to the external device 18 via the communication unit 17, and reception processing of the signal is performed in the external device 18. That is, the operation unit 11 of the electronic device 10 can be used as an input device of the external device 18, and an operation result is reflected on a display unit 18a of the external device 18. In other words, the PC mode is an example of the second mode of the electronic device 10 in which information received due to an operation on the operation unit 11 is transmitted to the external device 18 by the communication unit 17. The operation content based on each key of the operation unit 11 in the PC mode is appropriately set according to a type of an operating system of the external device 18 and an application operating on the external device 18. For example, in a case where the application of the external device 18 is in a state of receiving numerical value input, when each key in the numeric key region 11a is operated in the electronic device 10 in the PC mode, numerical information corresponding to the key is input to the external device 18, and the electronic device 10 can be used as a numerical value input device (so-called ten-key device) in the external device 18. In the PC mode, a key other than those in the numeric key region 11a in the operation unit 11 may be used as a command key for inputting a predetermined command other than a numerical value to the external device 18. For example, each key in the calculation instruction key region 11b and the memory key region 11c can function as an arrow key for moving a cursor or a command key for copying or pasting a character string. The operation content input via the operation unit 11 in the PC mode and a processing content based on the operation are displayed on the display unit 18a provided in the external device 18. As described above, the PC mode of the electronic device 10 is a mode in which the own device is operated to input information to at least the external device 18 without being used as a calculator.

As shown in FIG. 4, the communication between the electronic device 10 and the external device 18 is performed with the electronic device 10 as a peripheral apparatus and the external device 18 as a central apparatus. In a state where a power supply of the communication unit 17 is turned on and the electronic device 10 and the external device 18 are in a disconnected state, the electronic device 10 performs advertising at a predetermined cycle. The advertising is broadcast communication for transmitting data from the peripheral apparatus to an unspecified number of partners, and is a state of indicating a location of the own device to the central apparatus and waiting for connection (a state of attempting connection). When the external device 18, which is the central apparatus, makes a connection request to the electronic device 10 during the advertising, the electronic device 10 stops the advertising and switches to one-to-one communication with the external device 18.

The data communication between the electronic device 10 and the external device 18 is performed by encrypting the data. When pairing is performed between the electronic device 10 and the external device 18 to exchange a data encryption key while the one-to-one communication is being performed, and the pairing is established, the electronic device 10 and the external device 18 are connected such that data communication is possible therebetween. In a case of the electronic device 10 and the external device 18 that have been connected in the past, as long as bonding for storing the key exchanged in the previous pairing has been performed, the electronic device 10 and the external device 18 are shifted to a state where encrypted communication can be performed without performing pairing processing, at a stage in which the communication between the electronic device 10 and the external device 18 is established.

As shown in FIG. 5, the electronic device 10 is roughly divided into five operation states ST1 to ST5. ST0 and ST6 are states in which a main power supply of the electronic device 10 is turned off. When the user performs an operation of turning on the main power supply in a state where the main power supply is turned off, the electronic device 10 is started up. The main power supply is turned on and off by, for example, long-pressing the all-clear key 11e or operating a power switch (not shown). The control unit 13 stores, in the memory 15, the operation mode used when the main power supply of the electronic device 10 is previously turned off, and starts up the electronic device 10 in the CAL mode by turning on the main power supply when the previous operation mode is the CAL mode, and starts up the electronic device 10 in the PC mode by turning on the main power supply when the previous operation mode is the PC mode.

When the electronic device 10 is started up in the CAL mode by turning on the main power supply, the CAL mode (disconnection) of ST1 is selected. In the CAL mode (disconnection) of ST1, the control unit 13 continues a state where the power supply of the communication unit 17 is turned off, and operates the electronic device 10 in a disconnection state where communication with the external device 18 is not performed. That is, the electronic device 10 is operated as a stand-alone calculator. When the user operates the SEND key 11f during the operation in the CAL mode (disconnection) of ST1, the control unit 13 turns on the power supply of the communication unit 17 to set the electronic device 10 to an advertising state, and the mode transitions to the CAL mode (during AD) of ST2. Processing performed in the CAL mode (during AD) of ST2 is an example of connection processing for performing wireless communication with the external device 18, and more specifically, an example of first connection processing. The connection processing includes at least advertising, and may further include other processing (including, for example, pairing and bonding) performed to establish a connection in response to the connection request. When a connection request from the external device 18 is received in the CAL mode (during AD) of ST2 and the connection with the external device 18 is established (a state where the encrypted data communication can be performed), the mode transitions to the CAL mode (during connection) of ST3.

In the CAL mode (disconnection) of ST1, when the user operates the operation unit 11 to input numerical values to the electronic device 10 and causes the electronic device 10 to perform calculation, the numerical values input at the time of operating the SEND key 11f or a calculation result (a value displayed in the first display region 12a of the display unit 12) is transmitted to the external device 18 at a stage of the CAL mode (during connection) of ST3. Further, in the CAL mode (during connection) of ST3, when the SEND key 11f is operated in a state where the user operates the operation unit 11 to input numerical values to the electronic device 10 and causes the electronic device 10 to perform calculation, the numerical values or the calculation result (the value displayed in the first display region 12a of the display unit 12) input at the time of operating the SEND key 11f is transmitted to the external device 18. That is, in the CAL mode, by operating the SEND key 11f, the numerical values input in the CAL mode and the calculation result obtained in the CAL mode can be shared with the external device 18 to which the electronic device 10 is wirelessly connected.

When a specific time elapses or a specific key such as the all-clear key 11e is operated in the CAL mode (during AD) of ST2, the control unit 13 turns off the power supply of the communication unit 17 to cancel the advertising, and the mode transitions to the CAL mode (disconnection) of ST1. In the CAL mode (during connection) of ST3, when the communication with the external device 18 is interrupted (for example, the power supply of the external device 18 is turned off, a distance between the electronic device 10 and the external device 18 is greatly increased, or the like), the mode transitions to the CAL mode (during AD) of ST2.

When the user operates the PC/CAL key 11g during the operation in the CAL mode (disconnection) of ST1, the control unit 13 turns on the power supply of the communication unit 17 to cause the electronic device 10 to enter the advertising state, and the mode transitions to a mode switching state (during AD) of ST4. Processing performed in the mode switching state (during AD) of ST4 is an example of the connection processing for performing wireless communication with the external device 18, and more specifically, an example of second connection processing. When the connection request from the external device 18 is received in the mode switching state (during AD) of ST4 and the connection with the external device 18 is established (a state where the encrypted data communication can be performed), the mode transitions to the PC mode (during connection) of ST5. When the user operates the PC/CAL key 11g during the operation in the CAL mode (during connection) of ST3, the mode transitions to the PC mode (during connection) of ST5. In the CAL mode (during connection) of ST3, since the connection between the electronic device 10 and the external device 18 is already established, the mode can be shifted to the PC mode (during connection) of ST5 without going through advertising. In this way, the mode can be switched from the CAL mode to the PC mode in response to any operation from the user. In the PC mode (during connection) of ST5, the operation content performed by the user on the operation unit 11 of the electronic device 10 is input to the external device 18, and the electronic device 10 can be used as an input device of the external device 18. When the user operates the PC/CAL key 11g in the PC mode (during connection) of ST5, the mode transitions to the CAL mode (during connection) of ST3.

When a specific time elapses or a specific key such as the all-clear key 11e is operated in the mode switching state (during AD) of ST4, the control unit 13 turns off the power supply of the communication unit 17 to cancel the advertising, and the mode transitions to the CAL mode (disconnection) of ST1. In the PC mode (during connection) of ST5, when the communication with the external device 18 is interrupted (for example, the power supply of the external device 18 is turned off, the distance between the electronic device 10 and the external device 18 is greatly increased, or the like), the mode transitions to the mode switching state (during AD) of ST4.

When the electronic device 10 is started up in the PC mode by turning on the main power supply, the control unit 13 supplies power to the communication unit 17 to turn on the power supply to start advertising, and performs the connection to the external device 18 after setting the mode to the mode switching state (during AD) of ST4. Since previous use of the electronic device 10 being ended in the PC mode means that the electronic device 10 is paired with the external device 18 and connected to the external device 18, as long as the external device 18 is started up at the stage and can communicate with the electronic device 10, the connection between the electronic device 10 and the external device 18 is immediately established, and the electronic device 10 enters the PC mode (during connection) of ST5. However, in a state where the external device 18 is not powered on or in a state where the distance between the electronic device 10 and the external device 18 increases and communication is impossible, the PC mode is not established, and the state transitions to the mode switching state (during AD) of ST4.

In a case where the electronic device 10 operates in the CAL mode (ST1, ST3) or the PC mode (PT5), when an operation of turning off the main power supply is performed by the user, the control unit 13 turns off the main power supply of the electronic device 10. Further, the electronic device 10 has an auto power-off function of automatically turning off the main power supply after a specific time elapses, and when a state where there is no input operation from the user continues for a specific time in the CAL mode (ST1, ST3) or the PC mode (PT5), the control unit 13 turns off the main power supply of the electronic device 10. When the main power supply is turned off in the CAL mode (ST1, ST3), the electronic device 10 enters a power-off state of ST0, and when the main power supply is turned off in the PC mode (ST5), the electronic device 10 enters a power-off state of ST6. The control unit 13 monitors the operation mode of the electronic device 10 when the main power supply is turned off, and causes the memory 15 to store whether the operation mode during the previous operation is the CAL mode or the PC mode. That is, when transitioning to the power-off state of ST0, information indicating that the mode is the CAL mode during the previous operation is stored in the memory 15, and when transitioning to the power-off state of ST6, information indicating that the mode is the PC mode during the previous operation is stored in the memory 15. Therefore, when the main power supply of the electronic device 10 is turned on, the control unit 13 can select whether to start up the electronic device 10 in the CAL mode or the PC mode by referring to the information stored in the memory 15.

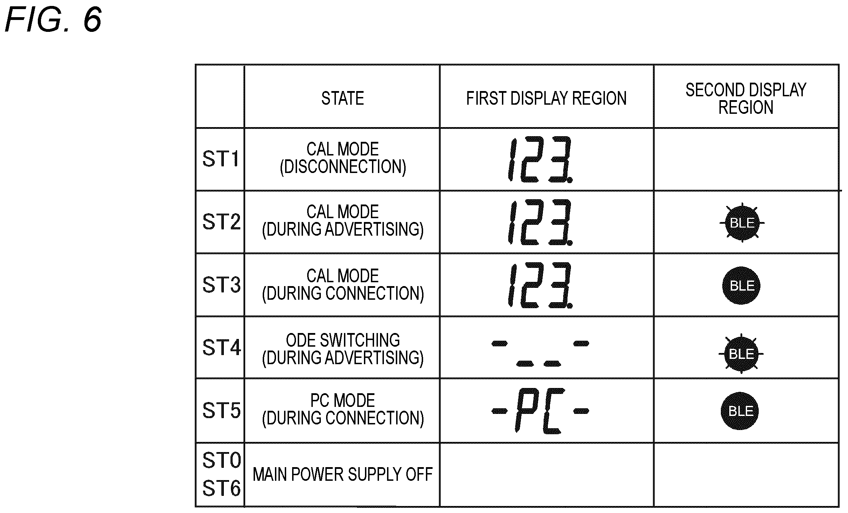

The control unit 13 causes the display unit 12 to perform a display in each of the states ST1 to ST5 via the display driver 16. The user can confirm an operation state of the electronic device 10 by viewing a display content on the display unit 12. FIG. 6 shows a display example of the display unit 12 in each state. In the CAL mode, regardless of whether the electronic device 10 is disconnected with the external device 18 (ST1), is advertising (ST2), or is connected with the external device 18 (ST3), the numerical values input by the user and the calculation result are displayed in the first display region 12a. The display examples of FIG. 6 show a case where keys "1", "2", and "3" in the numeric key region 11a are operated. During the advertising (ST2, ST4), that is, during execution of the connection processing, the communication indicator 12d in the second display region 12b blinks. In the CAL mode (during AD) of ST2, the numerical values and the calculation result are displayed in the first display region 12a as described above, but in the mode switching state (during AD) of ST4, a display in a special form using four seven-segment display units 12c (a display in which two hyphen and two underbars are combined) is displayed in the first display region 12a. During the connection with the external device 18 (ST3, ST5), the communication indicator 12d in the second display region 12b is lit (continuously lit). In the CAL mode (during connection) of ST3, the numerical values and the calculation result are displayed in the first display region 12a as described above, but in the PC mode (during connection) of ST5, a display in a special form using four seven-segment display units 12c (a display in which two hyphens and characters of PC are combined) is displayed in the first display region 12a.

In the electronic device 10, as shown in the display example of ST4 in FIG. 6, the control unit 13 displays, in the first display region 12a, unique information ("-__-") indicating that the own device is performing connection processing during the execution of the connection processing for performing wireless communication with the external device 18. Accordingly, the user can recognize without fail that the electronic device 10 is executing the connection processing. For example, if the user intentionally starts the connection processing, since the operation mode of the electronic device 10 at that time is always the CAL mode and the electronic device 10 is used as a calculator, it is considered that the user is operating the electronic device 10 while focusing on the display unit 12, particularly, the first display region 12a in which the result calculated by the calculator is displayed. Therefore, by displaying the unique information indicating that the connection processing is being executed in the first display region 12a, which is an existing display region of the electronic device 10, the user can recognize without fail that the electronic device 10 is executing the connection processing and hence the connection processing is ended (due to success or failure), as compared with a case where a dedicated LED lamp or the like is provided for displaying the state. Further, for example, when the user unintentionally starts the connection processing, for example, when the connection processing is started due to communication interruption or the like during the operation in the PC mode of ST5, since the electronic device 10 does not normally operate as the input device, it is considered that the user who recognizes the fact moves a line of sight from the external device 18 (display unit 18a) to the electronic device 10 to naturally confirm the state of the electronic device 10. In this case, since the information is displayed on the existing display unit 12 of the electronic device 10, particularly, the first display region 12a, which is most easily noticeable, the user can also recognize the state of the electronic device 10 without fail.

Further, in the electronic device 10, as shown in the display example of ST5 in FIG. 6, when the own device is operating in the PC mode after the connection processing involving mode switching of the operation mode is completed, the control unit 13 displays, on the first display region 12a, unique information ("-PC-") indicating that the own device is operating in the PC mode. Since the information displayed in the first display region 12a changes from the information ("-_ _-") indicating that the connection processing is being executed to the information ("-PC-") indicating that the electronic device 10 is operating in the PC mode, the user can recognize without fail that the electronic device 10 is operating in the PC mode. In particular, since the information indicating that the connection processing is being executed partially matches the information indicating that the electronic device 10 is operating in the PC mode, connection (continuity) between the states can be more intuitively recognized. Specifically, the information displayed during the connection processing is obtained by replacing "PC" indicating a mode name in the information displayed during the operation in the PC mode with two underbars. By using such information, the user can naturally imagine a state before the shift to the PC mode, and the state during the connection processing in ST4 can be correctly recognized as the state before the shift to the PC mode.

In the electronic device 10, as shown in the display examples of ST2 and ST4 in FIG. 6, the control unit 13 maintains the information displayed in the first display region 12a ("123" in this example) when the first connection processing of ST2 involving no mode switching of the operation mode is started, but changes the information displayed in the first display region 12a to the information ("-_ _-") indicating that the connection processing is being executed when the second connection processing of ST4 involving mode switching from the CAL mode to the PC mode is started. Accordingly, during execution of the first connection processing of ST2 in which the electronic device 10 operates in the CAL mode after the connection processing, the display that hinders the use of the electronic device 10 as a calculator is avoided, and on the other hand, in the second connection processing of ST4 in which mode switching occurs after the connection processing, it can be clearly displayed that the mode is being switched to allow the user to prepare for the mode after the switching. Further, as shown in the display examples of ST2 and ST4 in FIG. 6, the control unit 13 displays information (blinking display of a BLE icon) indicating that the connection processing is being executed in the second display region 12b during execution of both the first connection processing and the second connection processing. Accordingly, the user can recognize that the connection processing is being executed while avoiding the display that hinders the use of the electronic device 10 as a calculator during execution of the connection processing involving no mode switching. Further, as shown in FIG. 1 and the like, the electronic device 10 is configured such that the second display region 12b is smaller than the first display region 12a, and the predetermined information displayed in the second display region 12b is smaller than the numerical values displayed in the first display region 12a. With such a relationship, the user can reliably recognize that the connection processing (second connection processing) involving switching of the operation mode is being executed due to the display in the first display region 12a, and the user can recognize that the connection processing (first connection processing) involving no switching of the operation mode is being executed, in a form not interfering with the operation of the user due to an icon displayed in the second display region 12b.

In the electronic device 10, as shown in FIG. 5, the control unit 13 turns on the power supply of the communication unit 17 in conjunction with a start of the connection processing from ST1, and turns off the power supply of the communication unit 17 in conjunction with a stop of the connection processing for returning to ST1. Accordingly, power consumption of the electronic device 10 in the state of ST1 in which a communication function is not required can be prevented.

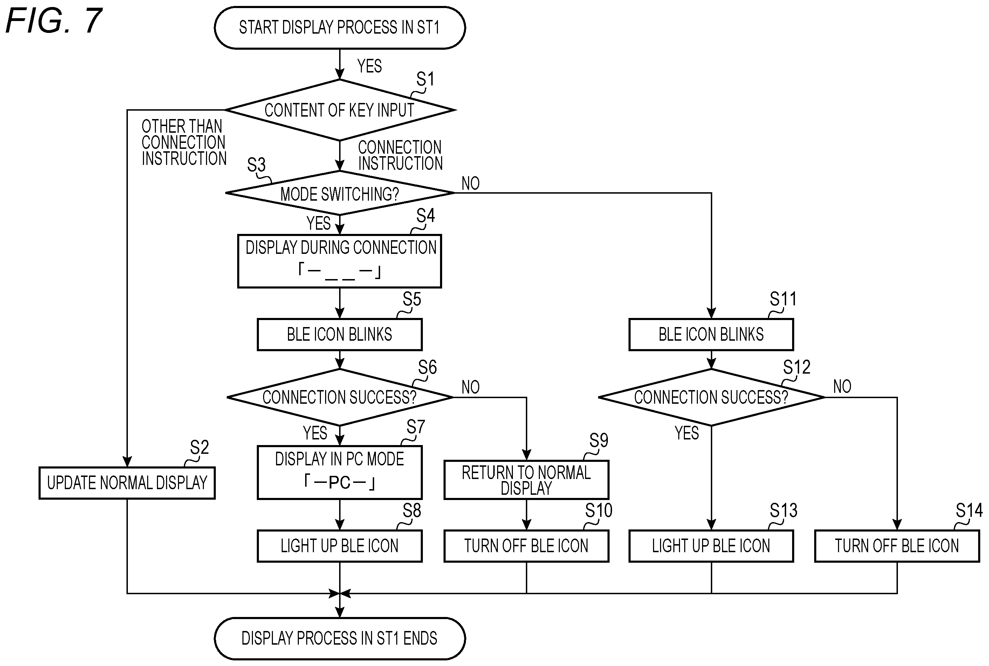

A process shown in FIG. 7 is an example of a display process performed by the control unit 13 in the CAL mode (disconnection) state of ST1 in the electronic device 10. The process shown in FIG. 7 is started, for example, when the CPU 14 executes a program stored in the memory 15 in the control unit 13. If the process shown in FIG. 7 is started, the control unit 13 first determines a content of the key input (step S1). Here, the control unit 13 determines whether the content of the key input is a connection instruction (an instruction for connection processing for performing wireless communication with the external device 18). Specifically, the control unit 13 determines whether the key input is performed by pressing the SEND key 11f or the PC/CAL key 11g. If it is determined that the key input is not pressing either the PC/CAL key 11g or the SEND key 11f and thus the content of the key input is other than the connection instruction (NO in step S1), the control unit 13 updates a normal display displayed in the first display region 12a (step S2) and ends the display process shown in FIG. 7. That is, in the CAL mode (disconnection), if an instruction other than the connection instruction is input, the electronic device 10 operates as a normal calculator, and the normal display in the first display region 12a is updated according to the input operation.

If it is determined that the content of the key input is a connection instruction (YES in step S1), the control unit 13 further determines whether the connection instruction is a connection instruction involving mode switching (step S3). Specifically, the control unit 13 determines whether the key input is performed by pressing the PC/CAL key 11g or by pressing the SEND key 11f. If it is determined that the key input is performed by pressing the PC/CAL key 11g and thus the connection instruction involves mode switching (YES is step S3), the control unit 13 controls the communication unit 17 to start the connection processing and displays, on the display unit 12, information indicating that the electronic device 10 is executing the connection processing started by pressing the PC/CAL key 11g after storing the information displayed in the first display region 12a into the memory 15. Specifically, the control unit 13 displays, in the first display region 12a, a display ("-_ _-") in a special form (step S4), and further causes the communication indicator 12d, which is a BLE icon, to blink in the second display region 12b (step S5). That is, the display of ST4 shown in FIG. 6 is performed. Thereafter, the control unit 13 monitors an end of the connection processing (step S6). If the connection processing is successful (YES in step S6), the control unit 13 displays, on the display unit 12, information indicating that the electronic device 10 is operating in the PC mode. Specifically, the control unit 13 displays, in the first display region 12a, a display in a special form ("-PC-") (step S7), and further lights up the BLE icon (communication indicator 12d) in the second display region 12b (step S8). That is, the display of ST5 shown in FIG. 6 is performed. If the connection processing fails and is interrupted, for example, when there is no connection request during the advertising (NO in step S6), the control unit 13 ends the display of the information indicating that the connection processing is being executed on the display unit 12. Specifically, the control unit 13 reads the information stored in the memory 15 before the display in step S4, returns to the normal display in the first display region 12a (step S9), and further turns off the BLE icon (communication indicator 12d) in the second display region 12b (step S10). That is, the display of ST1 shown in FIG. 6 is performed. In this way, when a connection instruction involving mode switching is input in the CAL mode (disconnection), the electronic device 10 displays, on the display unit 12, information indicating that the own device is executing the connection processing, during the execution of the connection processing, and displays, on the display unit 12, information indicating that the own device is operating in the PC mode after the connection processing is completed.

On the other hand, if it is determined that the key input is performed by pressing the SEND key 11f and thus the connection instruction does not involve mode switching (NO in step S3), the control unit 13 controls the communication unit 17 to start the connection processing and displays, on the display unit 12, information indicating that the electronic device 10 is executing the connection processing. Specifically, the control unit 13 causes the communication indicator 12d, which is a BLE icon, to blink in the second display region 12b (step S11). That is, the display of ST2 shown in FIG. 6 is performed. Thereafter, the control unit 13 monitors the end of the connection processing (step S12). If the connection processing is successful (YES in step S12), the control unit 13 displays, on the display unit 12, information indicating that the electronic device 10 is connected. Specifically, the control unit 13 lights up the BLE icon (communication indicator 12d) in the second display region 12b (step S13). That is, the display of ST3 shown in FIG. 6 is performed. If the connection processing fails (NO in step S12), the control unit 13 ends the display of the information indicating that the connection processing is being executed on the display unit 12. Specifically, the control unit 13 turns off the BLE icon (communication indicator 12d) in the second display region 12b (step S14). That is, the display of ST1 shown in FIG. 6 is performed. In this way, when a connection instruction involving no mode switching is input in the CAL mode (disconnection), the electronic device 10 displays, on the display unit 12, information indicating that the own device is executing the connection processing, during the execution of the connection processing, and displays, on the display unit 12, information indicating that the own device is connected after the connection processing is successfully completed.

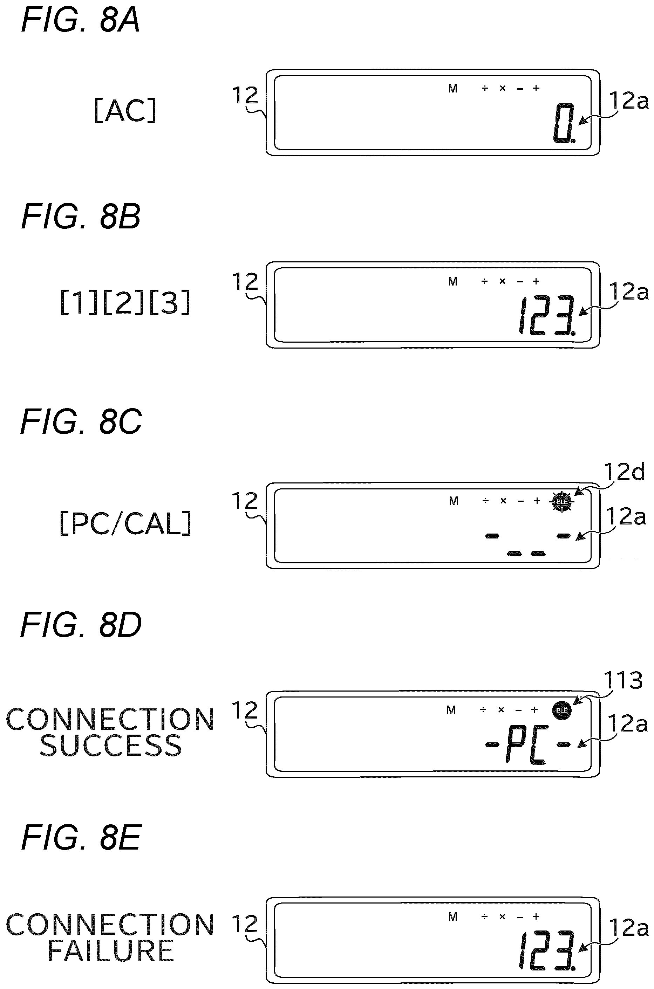

FIGS. 8A to 8E show a change in the display on the display unit 12 in a case where an operation of switching the electronic device 10 used as a stand-alone terminal in the CAL mode (disconnection) of ST1 to the PC mode is performed. More specifically, FIGS. 8A to 8E show a case where the user presses the all-clear key 11e, "1", "2", and "3" in the numeric key region 11a, and the PC/CAL key 11g in order in the electronic device 10 in the CAL mode (disconnection). FIGS. 8A to 8C are displays on the display unit 12 after the all-clear key 11e, the keys "1", "2", and "3" in the numeric key region 11a, and the PC/CAL key 11g are pressed, respectively. FIGS. 8D and 8E show displays on the display unit 12 after a success and a failure of the connection processing started by pressing the PC/CAL key 11g, respectively. In the CAL mode (disconnection), the display unit 12 is appropriately updated by a normal key operation such as the all-clear key 11e or the numeric key. On the other hand, when a connection instruction based on the PC/CAL key 11g is input, a unique change that does not occur due to a normal key operation occurs in the display unit 12. That is, as shown in FIG. 8C, the display of the first display region 12a is changed to a display in a special form different from a normal form, and the communication indicator 12d (BLE icon) is blinked and displayed in the second display region 12b. Accordingly, the user can appropriately recognize the state without overlooking that the connection processing involving mode switching is being performed. Further, when the connection processing is successful and the operation is started in the PC mode, as shown in FIG. 8D, the first display region 12a changes to a display in a special form indicating that the electronic device 10 is being operated in the PC mode, and in the second display region 12b, the blinking of the communication indicator 12d ends and the communication indicator 12d is continuously lit. By changing the display to a completely different display from that in the CAL mode in this way, the user can correctly recognize that the electronic device 10 is operating in the PC mode. Further, when the connection processing fails, the mode returns to the CAL mode (disconnection), and the display on the display unit 12 also returns to the state before the start of the connection processing, as shown in FIG. 8E. Accordingly, the user can recognize that the mode switching is not successful and the electronic device 10 is operating in the CAL mode.

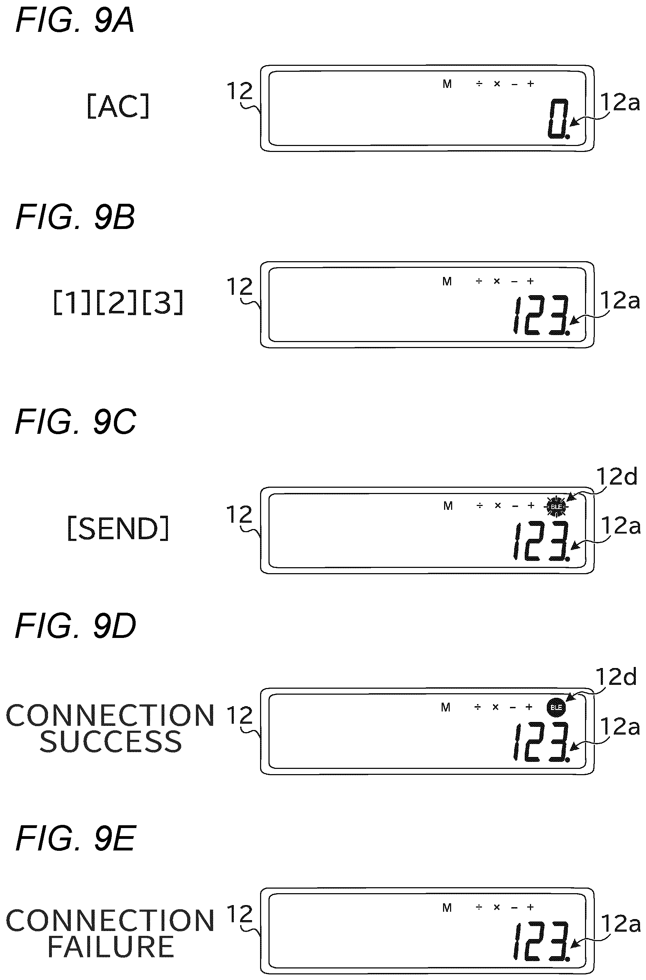

FIGS. 9A to 9E show a change in the display on the display unit 12 in a case where an operation of switching the electronic device 10 used in the CAL mode (disconnection) of ST1 as a stand-alone terminal to the CAL mode (during connection) of ST3, in which the communication with the external device 18 is possible, is performed. More specifically, FIGS. 9A to 9E show a case where the user presses the all-clear key 11e, "1", "2", and "3" in the numeric key region 11a, and the SEND key 11f in order in the electronic device 10 in the CAL mode (disconnection). FIGS. 9A to 9C are displays on the display unit 12 after the all-clear key 11e, the keys "1", "2", and "3" in the numeric key region 11a, and the SEND key 11f are pressed, respectively. FIGS. 9D and 9E are displays on the display unit 12 after the success and the failure of the connection processing started by pressing the SEND key 11f, respectively. In the CAL mode (disconnection), the display unit 12 is appropriately updated by the normal key operation such as the all-clear key 11e or the numeric key. On the other hand, when the connection instruction based on the SEND key 11f is input, the communication indicator 12d (BLE icon) is blinked and displayed in the second display region 12b while maintaining the display in the first display region 12a. Accordingly, the user can recognize that the connection processing is being executed while securing a display state in which the calculator function is continuously exhibited before and after the connection processing. Further, when the connection processing is successful and the CAL mode (during connection) is entered, as shown in FIG. 9D, the communication indicator 12d in the second display region 12b is changed from a blinking state to a continuous lighting state while continuously maintaining the display in the first display region 12a. On the other hand, when the connection processing fails and the mode returns to the CAL mode (disconnection), as shown in FIG. 9E, the blinking of the communication indicator 12d in the second display region 12b is turned off while continuously maintaining the display in the first display region 12a. Accordingly, the function in the CAL mode is continuously exhibited regardless of the success or failure of the connection processing, and the user can recognize the success or failure of the connection processing.

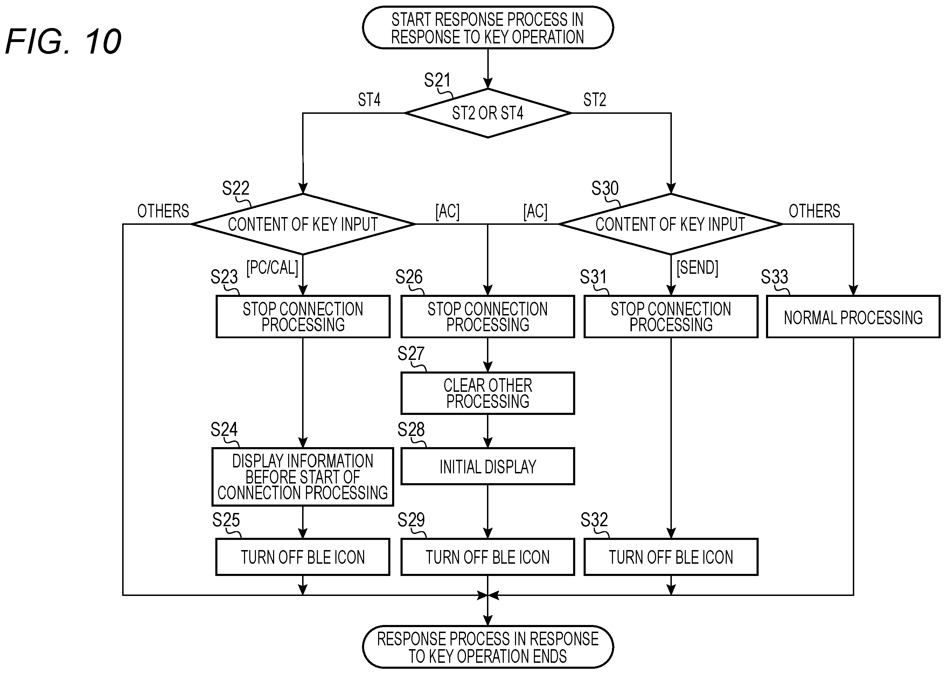

Although the connection processing and the display process associated with the connection processing have been described above with reference to FIGS. 6 to 9D, a cancellation process for stopping the connection processing and a display process associated with the cancellation process will be described below with reference to FIGS. 10 to 13D. A communication device generally has a function of stopping the connection processing in response to a key operation performed by a user. In a calculator such as the electronic device 10, the AC key is widely recognized as a key for stopping processing, and pressing the AC key is a typical example of a key operation for stopping the connection processing. In the electronic device 10, the connection processing can also be stopped by pressing the AC key. However, when the AC key is pressed, all processes including the connection processing are canceled. Therefore, for example, in a case where it is desired to cancel only the connection instruction, such as a case where the user inputs the connection instruction by an erroneous key operation, the AC key cannot sufficiently cope with this situation.

Therefore, the electronic device 10 is configured such that the control unit 13 stops the connection processing when a key operation performed by the user for starting the connection processing is performed again before the connection processing is completed. Accordingly, even if the user inputs the connection instruction by an erroneous operation, the connection processing can be easily stopped by immediately performing the same operation, and the connection instruction input by the user can be canceled by a simple and intuitive operation. More specifically, after detecting a first operation (pressing the PC/CAL key 11g) for instructing the mode switching from the CAL mode to the PC mode on the operation unit 11, when the first operation is detected again before the connection processing for performing the wireless communication with the external device 18 started by the first operation is completed, the control unit 13 stops the started connection processing and displays, on the display unit 12, information displayed before the start of the connection processing. Accordingly, when the PC/CAL key 11g is erroneously pressed, the connection processing can be stopped and the display state can be returned to the state before the connection processing, simply by pressing the PC/CAL key 11g again. Therefore, an influence of the erroneous operation can be prevented.

After detecting a second operation (pressing the SEND key 11f) for instructing the connection processing involving no mode switching on the operation unit 11, when detecting the second operation again before the connection processing for performing wireless communication with the external device 18 started by the second operation is completed, the control unit 13 stops the started connection processing. Accordingly, even if the SEND key 11f is erroneously pressed, the connection processing can be stopped simply by pressing the SEND key 11f again. Further, the control unit 13 starts the connection processing while maintaining the display on the first display region 12a, when the second operation is detected, and stops the connection processing while maintaining the display on the first display region 12a, when the second operation is detected again before the completion of the connection processing. Accordingly, even if the SEND key 11f is erroneously pressed, the same state as before the connection processing can be maintained after the connection processing is stopped. Therefore, the influence of the erroneous operation can be prevented. In this way, in the electronic device 10, by operating the control unit 13 to cancel an immediately preceding instruction for the same key operation, a cancel operation that is intuitive and easy for the user to use for various key operations can be implemented.

A process shown in FIG. 10 is an example of a response process performed by the control unit 13 in the electronic device 10 in response to a key operation performed during the connection processing, and includes a cancellation process of stopping the connection processing. The process shown in FIG. 10 is started, for example, when the CPU 14 executes a program stored in the memory 15 in the control unit 13. If the process shown in FIG. 10 is started, the control unit 13 determines whether a state of the electronic device 10 is ST2 or ST4 (step S21). That is, it is determined whether the connection processing involving mode switching of the operation mode is being executed or the connection processing involving no mode switching of the operation mode is being executed. Specifically, the control unit 13 determines ST4 when the communication unit 17 is controlled by pressing the PC/CAL key 11g to start the connection processing, and determines ST2 when the communication unit 17 is controlled by pressing the SEND key 11f to start the connection processing. If it is determined that the communication unit 17 is controlled by pressing the PC/CAL key 11g to start the connection processing, that is, the state is ST4, the control unit 13 further determines a content of the key input (step S22). Here, the control unit 13 determines whether the content of the key input is the all-clear key 11e, the PC/CAL key 11g, or others.

If the key input is not pressing either the all-clear key 11e or the PC/CAL key 11g, the control unit 13 does not accept the key input. The control unit 13 ends the process shown in FIG. 10 without performing any processing. In this case, the connection processing is not stopped. If the key input is the PC/CAL key 11g, the control unit 13 controls the communication unit 17 to stop the connection processing (step S23). The control unit 13 further stops the display in a special form during the connection processing to display the information before the start of the connection processing in the first display region 12a (step S24), turns off the BLE icon (communication indicator 12d) in the second display region 12b (step S25), and ends the process shown in FIG. 10. Since the information before the start of the connection processing is stored in the memory 15 in advance when the connection processing is started, the control unit 13 reads the information and displays the information in the first display region 12a. If the key input is the all-clear key 11e, the control unit 13 controls the communication unit 17 to stop the connection processing, and further stops other processing (step S26 and step S27). The control unit 13 further stops the display in a special form during the connection processing to change the first display region 12a to an initial display ("0") (step S28), turns off the BLE icon (communication indicator 12d) in the second display region 12b (step S29), and ends the process shown in FIG. 10.

On the other hand, if it is determined that the communication unit 17 is controlled by pressing the SEND key 11f to start the connection processing, that is, the state is ST2, the control unit 13 further determines a content of the key input (step S30). Here, the control unit 13 determines whether the content of the key input is the all-clear key 11e, the SEND key 11f, or others. If the key input is not pressing either the all-clear key 11e or the SEND key 11f, the control unit 13 performs a normal display process corresponding to the key input (step S33), and ends the process shown in FIG. 10 in a state where the display is updated. In this case, the connection processing is not stopped. If the key input is the SEND key 11f, the control unit 13 controls the communication unit 17 to stop the connection processing (step S31), turns off the BLE icon (communication indicator 12d) in the second display region 12b (step S32), and ends the process shown in FIG. 10. If the key input is the all-clear key 11e, the process is as described above.

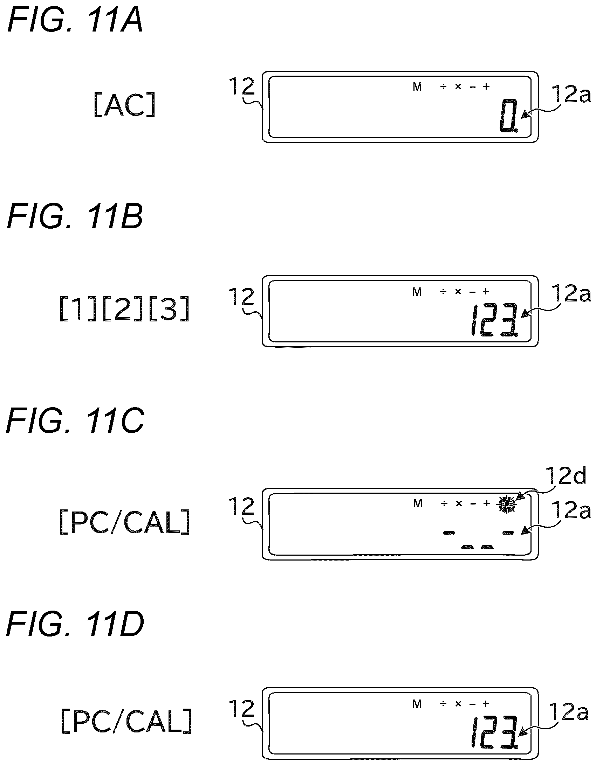

FIGS. 11A to 11D show a change in the display on the display unit 12 when an operation of switching the electronic device 10 used in the CAL mode (disconnection) of ST1 as a stand-alone terminal to the PC mode is performed halfway and then the same operation is performed again to cancel the instruction. More specifically, FIGS. 11A to 11D show a case where the user presses the all-clear key 11e, "1", "2", and "3" in the numeric key region 11a, the PC/CAL key 11g, and the PC/CAL key 11g in order in the electronic device 10 in the CAL mode (disconnection). FIGS. 11A to 11D are displays on the display unit 12 after the all-clear key 11e, the keys "1", "2", and "3" in the numeric key region 11a, the first-time PC/CAL key 11g, and the second-time PC/CAL key 11g are pressed, respectively. As shown in FIGS. 11B to 11D, when the connection processing started by pressing the PC/CAL key 11g is stopped by pressing the PC/CAL key 11g, the same display is performed on the display unit 12 before and after the start and stop of the connection processing in which the display in a special form is performed. Therefore, the user can continue the operation without any particular inconvenience after canceling the erroneously performed connection instruction.

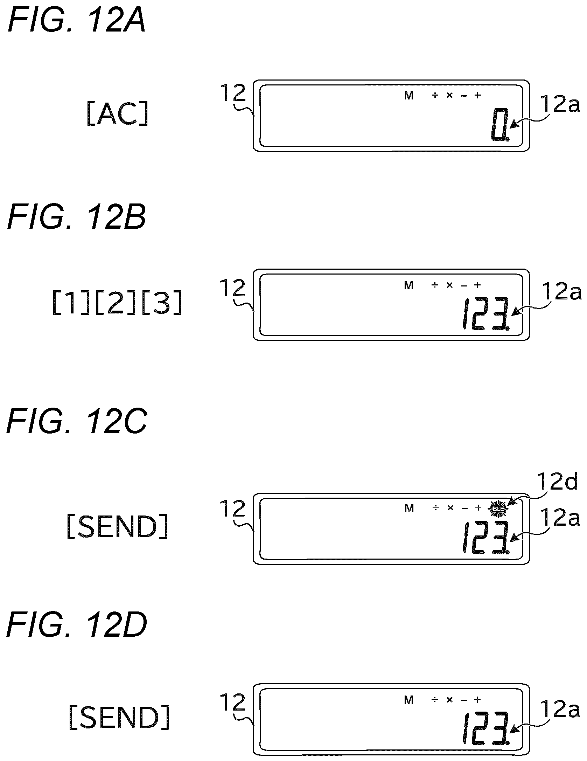

FIGS. 12A to 12D show a change in the display on the display unit 12 when an operation of switching the electronic device 10 used in the CAL mode (disconnection) as a stand-alone terminal to the CAL mode (during connection) in which the electronic device 10 can communicate with the external device 18 is performed and then the same operation is performed again to cancel the instruction. More specifically, FIGS. 12A to 12D show a case where the user presses the all-clear key 11e, "1", "2", and "3" in the numeric key region 11a, the SEND key 11f, and the SEND key 11f in order in the electronic device 10 in the CAL mode (disconnection). FIGS. 12A to 12D show displays on the display unit 12 after the all-clear key 11e, the keys "1", "2", and "3" in the numeric key region 11a, the first-time SEND key 11f, and the second-time SEND key 11f are pressed, respectively. As shown in FIGS. 12B to 12D, when the connection processing started by pressing the SEND key 11f is stopped by pressing the SEND key 11f, the display in the first display region 12a is always maintained. Therefore, in this case, the user can also continue the operation without any particular inconvenience after canceling the erroneously performed connection instruction.

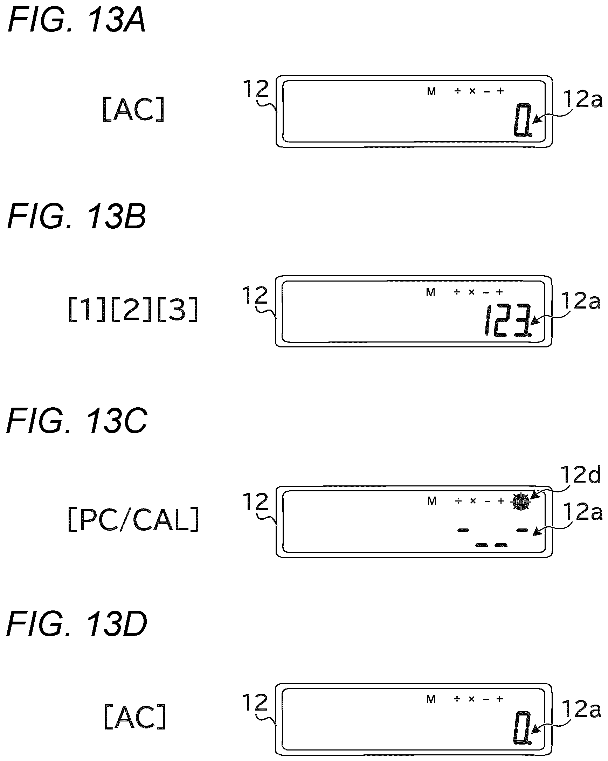

FIGS. 13A to 13D show a change in the display on the display unit 12 when an operation of switching the electronic device 10 used in the CAL mode (disconnection) as a stand-alone terminal to the PC mode is performed halfway and then the all-clear key 11e is pressed to cancel the instruction. More specifically, FIGS. 13A to 13D show a case where the user presses the all-clear key 11e, "1", "2", and "3" in the numeric key region 11a, the PC/CAL key 11g, and the all-clear key 11e in order in the electronic device 10 in the CAL mode (disconnection). FIGS. 13A to 13D are displays on the display unit 12 after the all-clear key 11e, the keys "1", "2", and "3" in the numeric key region 11a, the PC/CAL key 11g, and the all-clear key 11e are pressed, respectively. As shown in FIGS. 13B to 13D, when the connection processing started by pressing the PC/CAL key 11g is stopped by pressing the all-clear key lIe before the connection processing is completed, the initial display ("0") is displayed instead of performing, on the display unit 12, the same display as that before the start of the connection processing after the connection processing is stopped. Therefore, the same is particularly effective not only for the erroneously performed connection instruction but also for resetting all processes to start the operation again from the beginning.

The illustrative embodiment described above is a specific example for facilitating understanding of the present disclosure, and the present invention is not limited to the illustrative embodiment but should be understood to include various modifications and alternative forms of the illustrative embodiment described above.

In the above illustrative embodiment, an example in which the electronic device operates the CAL mode or the PC mode has been described, but the electronic device may operate in still another operation mode. That is, the electronic device may operate in any of a plurality of operation modes including at least the CAL mode and the PC mode, and the control unit 13 may operate the electronic device 10 in any of the plurality of operation modes. Further, in the above illustrative embodiment, an example in which the operation unit 11 of the electronic device 10 includes a plurality of physical keys has been described, but the display unit 12 may include software keys instead of the physical keys as long as an operation of the user can be received.

In the above illustrative embodiment, an example is shown in which the control unit 13 displays the information indicating that the connection processing is being executed in the first display region 12a during the execution of the connection processing involving mode switching, but the control unit 13 may display the information indicating that the connection processing is being executed in the first display region 12a during the execution of the connection processing regardless of whether the connection processing involves mode switching. Whether to display the information indicating that the connection processing is being executed in the first display region 12a during the execution of the connection processing involving no mode switching may be changeable by setting. Further, in the above illustrative embodiment, an example is shown in which, when an operation for instructing the mode switching is detected and then the same operation is detected again before the connection processing started by the operation is completed, the control unit 13 displays the information displayed before the start of the connection processing on the display unit in addition to stopping the connection processing, but the processing of displaying the information displayed before the start of the connection processing may not be necessarily performed as long as the connection processing is appropriately stopped. When the operation for instructing the mode switching is detected again, for example, the control unit 13 may perform another display indicating that the connection processing is stopped, or may restore only the information displayed in the first display region 12a among the information displayed on the display unit before the start of the connection processing.

In the above illustrative embodiment, an example in which the electronic device 10 includes the display unit 12 has been described, but the display unit 12 may be any device that displays the calculation result or the like in the first mode and may be, for example, another device (display device) connected to the electronic device 10.

Although the electronic device 10 of the above illustrative embodiment functions as a calculator in the first mode, the electronic device to which the present invention is applied is not limited to a calculator. Any device may be used as long as the device is connected to the external device 18 and operates as an input device. For example, the electronic device 10 may be a smartphone or the like that can be used by switching between a first mode in which the electronic device 10 operates as a normal smartphone and a second mode in which the electronic device 10 operates as an input device for the external device 18.

## Claims

1. A computer program for controlling an operation of an electronic device, the electronic device including:
a user interface configured to receive a user operation;
a communication module including an antenna for performing wireless communication with an external device; and
at least one processor,
the computer program comprising instructions which, when the program is executed by the at least one processor, causing the electronic device to perform:
operating in any of a plurality of operation modes including:
a first mode in which a calculation is performed based on an operation on the user interface; and
a second mode in which information input via the user interface is transmitted to the external device via the communication module;
detect, on the user interface, a first operation for instructing mode switching from the first mode to the second mode; and
after detecting the first operation and before a connection processing for performing wireless communication with the external device is completed, the connection processing being started by the first operation, in response to detecting the first operation again, stopping the connection processing.

2. The computer program according to claim 1, wherein the instructions, when executed by the at least one processor, cause the electronic device to perform:
in response to the first operation being detected again, after the first operation is detected and before the connection processing started by the first operation is completed, displaying, on a display unit, information that was displayed the connection processing started.

3. The computer program according to claim 1 or 2, wherein the instructions, when executed by the at least one processor, cause the electronic device to perform:
after detecting a second operation on the user interface, a connection processing for performing wireless communication with the external device having been started by the second operation and not involving mode switching from the first mode, and before the connection processing is completed, in response to detecting the second operation again, stopping the connection processing.

4. The computer program according to claim 3, wherein the instructions, when executed by the at least one processor, cause the electronic device to perform:
in response to detecting the second operation, starting the connection processing while maintaining a display of a numerical value, which is a result of the calculation in the first mode, in a predetermined region on the display unit; and
in response to detecting the second operation again before the connection processing is completed, stopping the connection processing while maintaining the display in the predetermined region.

5. The computer program according to claim 1 or 2, wherein the instructions, when executed by the at least one processor, cause the electronic device to perform:
in response to detecting an operation on an all-clear (AC) key provided in the user interface after detecting the first operation and before the connection processing started by the first operation is completed, updating a display in a predetermined region on the display unit, the predetermined region being for displaying a numerical value, which is a result of the calculation in the first mode, to an initial display.

6. An operation method comprising controlling an electronic device to:
operate in any of a plurality of operation modes including:
a first mode in which a calculation is performed based on an operation on a user interface configured to receive a user operation; and
a second mode in which information input via the user interface is transmitted to an external device;
detect, on the user interface, a first operation for instructing mode switching from the first mode to the second mode; and
after detecting the first operation and before a connection processing for performing wireless communication with the external device is completed, the connection processing being started by the first operation, in response to detecting the first operation again, stop the connection processing.

7. An electronic device comprising:
a user interface configured to receive a user operation;
a communication module including an antenna for performing wireless communication with an external device; and
at least one processor configured to:
operate the electronic device to operate in any of a plurality of operation modes including:
a first mode in which a calculation is performed based on an operation on the user interface; and
a second mode in which information input via the user interface is transmitted to the external device by the communication module;
detect, on the user interface, a first operation for instructing mode switching from the first mode to the second mode; and
after detecting the first operation and before a connection processing for performing wireless communication with the external device is completed, the connection processing being started by the first operation, in response to detecting the first operation again, stop the connection processing.
